# EUROPEAN PATENT APPLICATION

(11) **EP 4 531 194 A1**
(43) Date of publication of application: **02.04.2025**
(21) Application number: 23920591.7
(22) Date of filing: 10.03.2023
(51) Int. Cl.: H01M 50/505, H01M 50/528

(54) **DISC BUSBAR STRUCTURE AND BATTERY PACK**

(30) Priority: 10.02.2023 CN 202310108818; 10.02.2023 CN 202320203233 U
(71) Applicant: Eve Energy Co. Ltd., Huizhou, Guangdong 516000 (CN)
(72) Inventor: XUE, Yang, Huizhou, Guangdong 516000 (CN); LIU, Shengqi, Huizhou, Guangdong 516000 (CN); SONG, Pengyuan, Huizhou, Guangdong 516000 (CN)
(74) Representative: Petraz, Gilberto Luigi
(86) International application number: PCT/CN2023/080722
(87) International publication number: WO 2024/164385

(57) **Abstract**

Proposed in the present disclosure is a current collector structure, including a positive current collector, in which the positive current collector includes a current collector body and a current collector leading-out tab connected to each other; in which the current collector body is provided with a center underflow hole through the current collector body in a thickness direction thereof, and an entire surface of a surface of the current collector body in the thickness direction is a welding surface configured to weld with a positive tab of a winding core. Proposed in the present disclosure is also a battery pack including the aforementioned current collector structure.

## Description

### TECHNICAL FIELD

The present disclosure relates to the technical field of current collectors, and in particular to a current collector structure and a battery pack.

### BACKGROUND

Compared with traditional batteries made of such as nickel-cadmium and lead-acid, lithium-ion batteries have the advantages of such as high energy density, high operating voltage, low self-discharge rate, long cycle life, high charging and discharging efficiency, wide operating temperature range, and low environmental pollution. At present, lithium-ion batteries have been widely used in mobile phones, notebooks and other 3C devices and new energy vehicles, and also have broad application prospects in civil aircraft, drones, space probes and other aerospace fields.

At present, laser welding is often employed in lithium-ion batteries to weld the positive current collector and the exposed positive tab of the winding core. However, the forming process of the positive current collector in the related technology is relatively complicated, with arc-shaped, flanging and other structures, and there are multiple protrusions and one or more of groove structures, resulting in a small welding area, which is prone to poor welding problems, which allows potential improvements.

### SUMMARY

An objective of the present disclosure is to propose a current collector structure with a large welding area to reduce the problem of poor welding.

In a first aspect, provided in the present disclosure is a current collector structure, including a positive current collector.

The positive current collector includes a current collector body and a current collector leading-out tab connected to each other.

The current collector body is provided with a center underflow hole through the current collector body in a thickness direction thereof, and
an entire surface of a surface of the current collector body in the thickness direction is a welding surface configured to weld with a positive tab of a winding core.

In an implementation, one or more of peripheral underflow holes are arranged at intervals along a perimeter of the current collector body at outer side.

In an implementation, the current collector body is provided with an inner underflow hole in a thickness direction of the current collector body, and the inner underflow hole is arranged on a side of the center underflow hole.

In an implementation, a welding surface of the current collector body is welded by laser screw welding or laser spot welding.

In an implementation, one or more of the laser screw welding form a screw welding outer boundary and a screw welding inner boundary, the screw welding outer boundary and the screw welding inner boundary are circular and provided concentrically with the center underflow hole, and a center of the inner underflow hole is located on the screw welding outer boundary.

Alternative, one or more of the laser spot welding form a spot welding outer boundary and a spot welding inner boundary, the spot welding outer boundary and the spot welding inner boundary are circular and provided concentrically with the center underflow hole, and a center of the inner underflow hole is located on the spot welding outer boundary.

In an implementation, two surfaces of the current collector body in a thickness direction of the current collector body are provided with a protrusion and a groove correspondingly, the groove and the protrusion are aligned with each other and fit together in shape, the protrusion is arranged on a welding surface, and
at least part of the protrusion extends to edges of the current collector body.

In an implementation, one or more of protrusions are provided and are in arc shapes, two ends of each of the protrusions extend to an edge of the current collector body to form a positive current collecting area around an edge part of the current collector body, and
one or more of the peripheral underflow holes are provided at one or more of the positive current collecting areas correspondingly.

In an implementation, the current collector body is provided with one or more of electrolyte positive electrode infiltration channels through the current collector body in the thickness direction thereof.

In an implementation, one or more of the electrolyte positive electrode infiltration channels are distributed in an annular array centered on the center underflow hole; and
an area between the center underflow hole and one or more of the electrolyte positive electrode infiltration channels is welded by laser screw welding or laser spot welding.

In an implementation, one or more of the laser screw welding form a screw welding outer boundary and a screw welding inner boundary, the screw welding outer boundary and the screw welding inner boundary are circular and provided concentrically with the center underflow hole, and one or more of the electrolyte positive electrode infiltration channels are provided outside the screw welding outer boundary.

Alternative, one or more of the laser spot welding form a spot welding outer boundary and a spot welding inner boundary, the spot welding outer boundary and the spot welding inner boundary are circular and provided concentrically with the center underflow hole, and one or more of the electrolyte positive electrode infiltration channels are provided outside the spot welding outer boundary.

In an implementation, two surfaces of the current collector body in a thickness direction of the current collector body are provided with a protrusion and a groove correspondingly, the groove and the protrusion are aligned with each other and fit together in shape, the protrusion is arranged on a welding surface;

one or more of protrusions are provided and are in arc shapes, both ends of each of the protrusions extend to an edge of the current collector body, and one electrolyte positive electrode infiltration channel is provided between two adjacent protrusions.

In an implementation, the current collector structure further includes:
a negative current collector, the negative current collector is provided with an center solder joint set at a center of a surface in a thickness direction thereof, the solder joints of the center solder joint set are distributed in at least two rows in a first direction, the solder joints in each row are distributed with an interval, and the solder joints in adjacent rows are misaligned.

In an implementation, the negative current collector is provided with one or more of electrolyte negative electrode infiltration channels through the negative current collector in the thickness direction thereof.

In an implementation, one or more of the electrolyte negative electrode infiltration channels are distributed in an annular array centered on the center solder joint set; and
an area between two adjacent electrolyte negative electrode infiltration channels is welded by laser screw welding or laser spot welding.

In a second aspect, provided in the present disclosure is also a battery pack including the aforementioned current collector structure.

In summary, the technical solutions of the present disclosure provide the beneficial effects as follows:

According to the embodiments of the present disclosure, due to the existence of multiple protrusions and one or more of grooves in the existing current collector, it is unable to weld at the protrusions and grooves, which may result in a smaller welding area. However, the present current collector structure is simplified. In addition to setting the necessary center underflow holes, an entire surface of the current collector body itself can be employed to weld with the positive tabs of the winding core. An increase in the welding surface can effectively lead to an increase in the contact area with the positive tabs of the winding core, lead to an increase in the current-carrying area, which effectively improves the rate performance of the tabs, improves the current-carrying capacity of the battery, and reduces heat generation. In addition, the whole surface welding technology is adopted on the current collector body, which is conducive to the welding stability of the current collector structure and reduces the occurrence of poor welding.

### BRIEF DESCRIPTION OF THE DRAWINGS

Fig. 1 is a schematic diagram of the current collector structure of embodiment I of the present disclosure in a top view;
Fig. 2 is a sectional view of A-A in Fig. 1;
Fig. 3 is a schematic diagram of laser screw welding in the current collector structure of embodiment I of the present disclosure in a top view;
Fig. 4 is a schematic diagram of laser spot welding in the current collector structure of embodiment I of the present disclosure in a top view;
Fig. 5 is a schematic diagram of a surface with a groove structure in the current collector structure of embodiment II of the present disclosure in a top view;
Fig. 6 is a sectional view of B-B in Fig. 5;
Fig. 7 is a schematic diagram of a surface of a protrusion structure in the current collector structure of embodiment II of the present disclosure in a top view;
Fig. 8 is a sectional view of C-C in Fig. 7;
Fig. 9 is a schematic diagram of the current collector structure of embodiment III of the present disclosure in a top view;
Fig. 10 is a schematic diagram of the current collector structure of embodiment IV of the present disclosure in a top view;
Fig. 11 is a schematic diagram of the current collector structure of embodiment V of the present disclosure in a top view; and
Fig. 12 is another schematic diagram of the current collector structure of embodiment V of the present disclosure in a top view.

Labels: 1 positive current collector; 11 current collector body; 111 positive current collecting area; 12 current collector leading-out tab; 13 center underflow hole; 14 peripheral underflow hole; 15 inner underflow hole; 16 protrusion; 17 groove; 18 electrolyte positive electrode infiltration channel; 2 laser screw welding; 21 screw welding outer boundary; 22 screw welding inner boundary; 3 laser spot welding; 31 spot welding outer boundary; 32 spot welding inner boundary; 4 negative current collector; 41 center solder joint set; 42 electrolyte negative electrode infiltration channel.

### DETAILED DESCRIPTION

In the description of the present disclosure, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description of the present disclosure and simplify description, but not to indicate or imply that the referred device or element has a specific orientation, or is constructed and operated in a specific orientation. Therefore, they should not be construed as a limitation of the present disclosure.

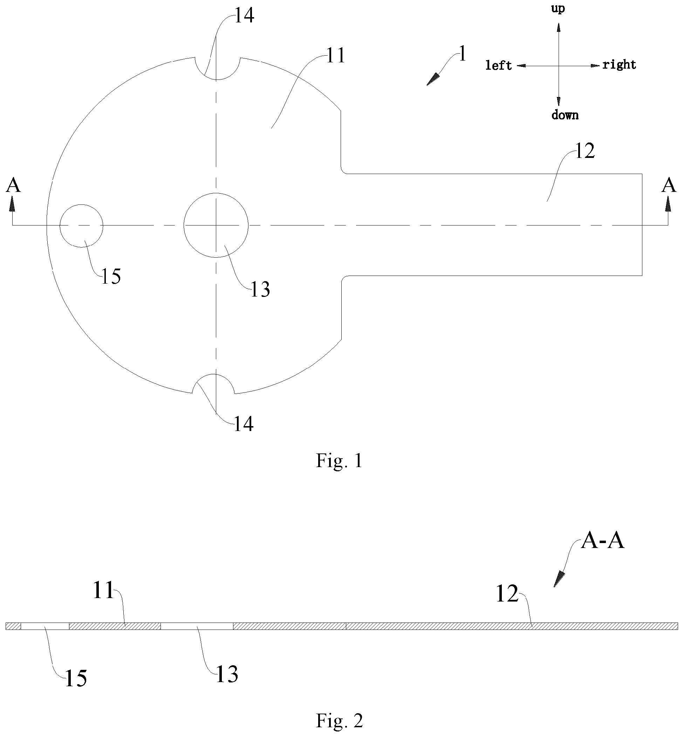

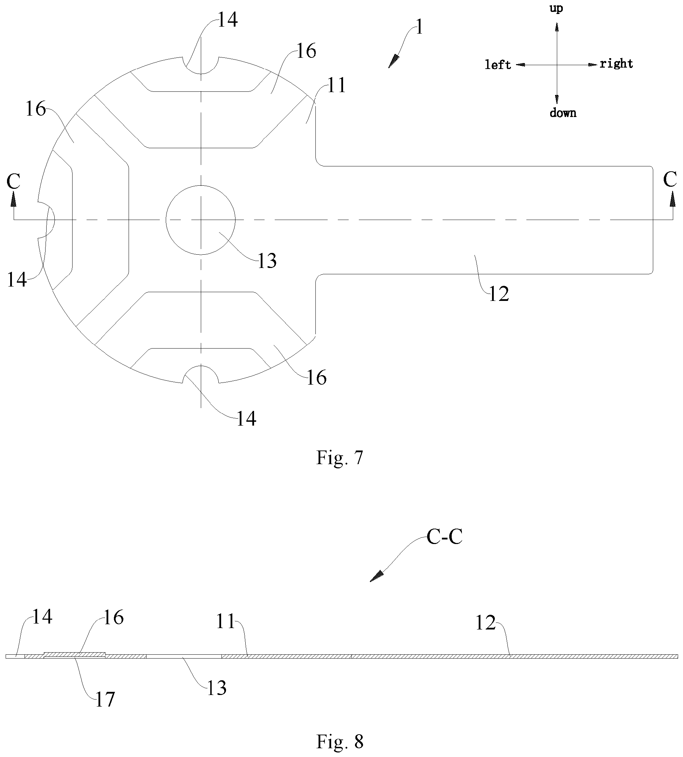

Hereinafter, the current collector structure and the battery pack according to the embodiments of the present disclosure are described with reference to Figs. 1-12. Hereinafter, some embodiments of the present disclosure are described in detail with reference to the accompanying drawings. Without conflict, the following embodiments and the features in the embodiments can be combined with each other.

Compared with traditional batteries made of such as nickel-cadmium and lead-acid, lithium-ion batteries have the advantages of such as high energy density, high operating voltage, low self-discharge rate, long cycle life, high charging and discharging efficiency, wide operating temperature range, and low environmental pollution. At present, lithium-ion batteries have been widely used in mobile phones, notebooks and other 3C devices and new energy vehicles, and also have broad application prospects in civil aircraft, drones, space probes and other aerospace fields.

At present, laser welding is often employed in lithium-ion batteries to weld the positive current collector 1 and the exposed positive tab of the winding core. However, the forming process of the positive current collector 1 in the prior art is relatively complicated, with arc-shaped, flanging and other structures, and there are multiple protrusions and one or more of groove structures, resulting in a small welding area, which is prone to poor welding problems, which allows potential improvements.

In view of this, proposed in the embodiments of the present disclosure is a current collector structure, which improves the structure of the positive current collector 1, increases the welding contact area of the positive current collector 1 and the positive tab of the winding core, is conducive to the welding stability of the positive current collector 1, and reduces the occurrence of poor welding.

The following are different specific embodiments.

### Embodiment I

According to Figs. 1 to 4, the current collector structure proposed in embodiment I of the present disclosure includes a positive current collector 1. The positive current collector 1 includes a current collector body 11 and a current collector leading-out tab 12 connected to each other. The current collector body 11 is provided with a center underflow hole 13 through the current collector body 11 in a thickness direction thereof, and an entire surface of a surface of the current collector body 11 in the thickness direction is a welding surface, which is configured to weld with a positive tab of a winding core.

According to the present embodiment I, due to the existence of multiple protrusions and one or more of grooves in the existing current collector, it is unable to weld at the protrusions and grooves, which may result in a smaller welding area. However, the present current collector structure is simplified. In addition to setting the necessary center underflow holes 13, an entire surface of the current collector body 11 itself can be employed to weld with the positive tabs of the winding core. An increase in the welding surface can effectively lead to an increase in the contact area with the positive tabs of the winding core, and can lead to an increase in the current-carrying area, which effectively improves the rate performance of the tabs, improves the current-carrying capacity of the battery, and reduces heat generation. In addition, the whole surface welding technology is adopted on the current collector body 11, which is conducive to the welding stability of the current collector structure and reduces the occurrence of poor welding. At the same time, the present current collector structure is not only simple in structure, but also leads to an improvement in manufacturing efficiency, and also leads to a reduction in cost.

Specifically, the center underflow hole 13 is aligned with the central hole of the winding core, which can ensure the fluid flowing condition to the greatest extent. Additionally and optionally, a diameter of the center underflow hole 13 is consistent with that of the central hole of the winding core.

Specifically, the current collector leading-out tab 12 is connected to a cap in a cover plate assembly by laser welding, and the current collector body 11 is welded to a surface of the positive tab of the winding core by laser line welding. Additionally and optionally, the positive current collector 1 is made of aluminum, for example 1060-O aluminum.

Further, according to Figs. 1 to 4, one or more of peripheral underflow holes 14 are arranged at intervals along a perimeter of the current collector body 11 at outer side. According to the present embodiment I, there are peripheral underflow holes 14 provided on a side of the current collector body 11. During the liquid injection operation, the electrolyte first reaches the current collector body 11, and then passes through the center underflow hole 13 into the winding core. In the present embodiment, in addition to the center underflow hole 13, the peripheral underflow hole 14 is also provided. Therefore, the electrolyte can simultaneously flow from the center underflow hole 13 and the peripheral underflow hole 14 into the winding core, which can assist in improving the liquid flowing capacity. Additionally and optionally, the shape of the peripheral underflow hole 14 is semi-circular. Admittedly, in some other embodiments, the peripheral underflow hole 14 may be square or half-oblong in shape.

Specifically, according to Fig. 1, provided are two peripheral underflow holes 14, and the two peripheral underflow holes 14 are respectively provided on an upper side and a lower side of the current collector body 11.

Further, according to Figs. 1 to 4, the current collector body 11 is provided with an inner underflow hole 15 through the current collector body 11 in a thickness direction thereof, and the inner underflow hole 15 is provided on a side of the center underflow hole 13. According to the present embodiment I, there are inner underflow holes 15 provided on the current collector body 11. During the liquid injection operation, the electrolyte first reaches the current collector body 11, and then passes through the center underflow hole 13 into the winding core. In the present embodiment, in addition to the center underflow hole 13, the inner underflow hole 15 is also provided. Therefore, the electrolyte can simultaneously flow from the center underflow hole 13 and the inner underflow hole 15 into the winding core, which can assist in improving the liquid flowing capacity. Additionally and optionally, the inner underflow hole 15 is circular in shape. Admittedly, in some other embodiments, the inner underflow hole 15 may be square or oblong in shape.

Note that according to the present embodiment I, the entire surface of a surface of the current collector body 11 in the thickness direction is a welding surface, which means that, except for the center underflow hole 13, the peripheral underflow hole 14, and the inner underflow hole 15 on the current collector body 11, the remaining surfaces of the current collector body 11 are employed to weld with the positive tabs of the winding core.

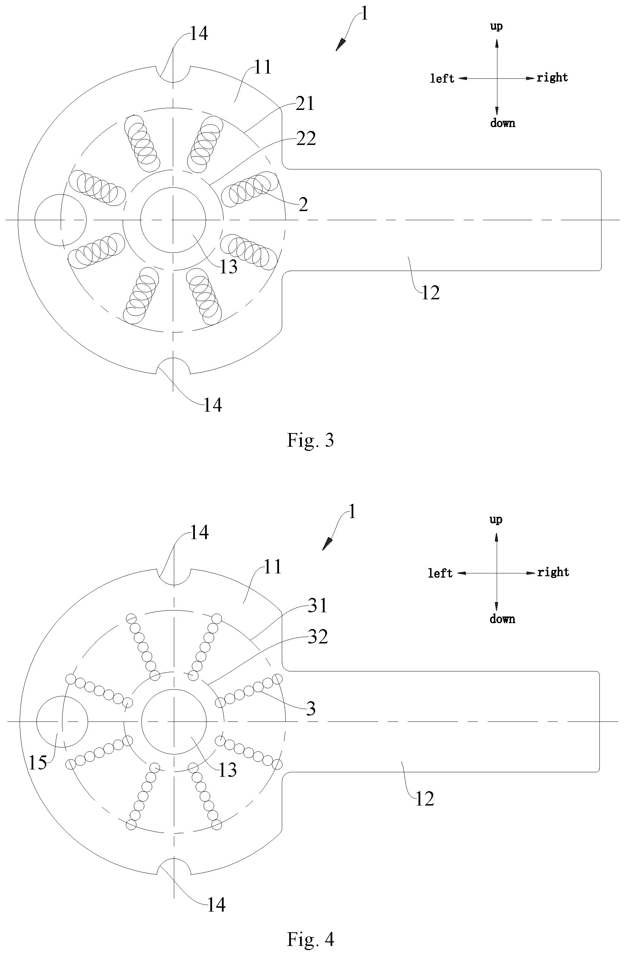

Further, according to Fig. 4, a welding surface of the current collector body 11 is welded by laser screw welding 2. According to the present embodiment I, since one or more of the laser screw welding 2 can effectively increase the welding area by forming a plurality of circular welding joints between the welding joints of the screw weld, the deformation of the current collector body 11 can be suppressed and the rigidity of the current collector body 11 can be improved due to an increase in the welding area. In addition, the welding energy is uniform, the shape, penetration depth and firmness of the welding joints are consistent, the appearance is smooth and beautiful with no deformation, and the welding is firm and reliable.

Specifically, one or more of the laser screw welding 2 form a screw welding outer boundary 21 and a screw welding inner boundary 22, and a center of the inner underflow hole 15 is located on the screw welding outer boundary 21. The screw welding outer boundary 21 and the screw welding inner boundary 22 are both circular and provided concentrically with the center underflow hole 13. The screw welding outer boundary 21, the screw welding inner boundary 22, and the center underflow hole 13 are sequentially arranged from the inside to the outside. Additionally and optionally, inner underflow holes 15 are provided between two adjacent laser screw welding 2.

Admittedly, in some other embodiments, according to Fig. 3, a welding surface of the current collector body 11 may also be welded by laser spot welding 3. The laser spot welding has the advantages of such as fast speed, high accuracy, small heat input, small deformation in workpiece, precise control, small focus light point, high positioning accuracy, and easy automation.

Specifically, one or more of the laser spot welding 3 form a spot welding outer boundary 31 and a spot welding inner boundary 32, and a center of the inner underflow hole 15 is located on the spot welding outer boundary 31.The spot welding outer boundary 31 and the spot welding inner boundary 32 are both circular and provided concentrically with the center underflow hole 13. The spot welding outer boundary 31, the spot welding inner boundary 32, and the center underflow hole 13 are sequentially arranged from the inside to the outside. Additionally and optionally, inner underflow holes 15 are provided between two adjacent laser spot welding 3.

Proposed in the present embodiment of the disclosure is not only a current collector structure, but also a battery pack including the aforementioned current collector structure.

### Embodiment II

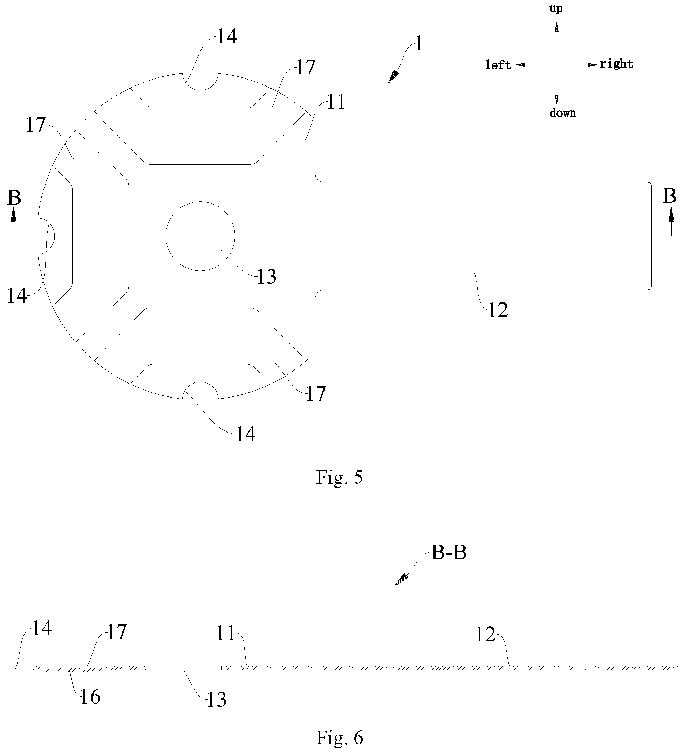

According to Figs. 5 to 8, the current collector structure proposed in embodiment II of the present disclosure includes a positive current collector 1. The positive current collector 1 includes a current collector body 11 and a current collector leading-out tab 12 connected to each other. The current collector body 11 is provided with a center underflow hole 13 through the current collector body 11 in a thickness direction thereof, and an entire surface of a surface of the current collector body 11 in the thickness direction is a welding surface, which is configured to weld with a positive tab of a winding core.

According to the present embodiment II, due to the existence of multiple protrusions and one or more of the grooves in the existing current collector, it is unable to weld at the protrusions and grooves, which may result in a smaller welding area. However, the present current collector structure is simplified. In addition to setting the necessary center underflow holes 13, an entire surface of the current collector body 11 itself can be employed to weld with the positive tabs of the winding core. An increase in the welding surface can effectively lead to an increase in the contact area with the positive tabs of the winding core, and can lead to an increase in the current-carrying area, which effectively improves the rate performance of the tabs, improves the current-carrying capacity of the battery, and reduces heat generation. In addition, the whole surface welding technology is adopted on the current collector body 11, which is conducive to the welding stability of the current collector structure and reduces the occurrence of poor welding. At the same time, the present current collector structure is not only simple in structure, but also leads to an improvement in manufacturing efficiency, and also leads to a reduction in cost.

Specifically, the center underflow hole 13 is aligned with the central hole of the winding core, which can ensure the fluid flowing condition to the greatest extent. Additionally and optionally, a diameter of the center underflow hole 13 is consistent with that of the central hole of the winding core.

Specifically, the current collector leading-out tab 12 is connected to a cap in a cover plate assembly by laser welding, and the current collector body 11 is welded to a surface of the positive tab of the winding core by laser line welding. Additionally and optionally, the positive current collector 1 is made of aluminum, for example 1060-O aluminum.

Further, according to Figs. 5 to 8, one or more of the peripheral underflow holes 14 are arranged at intervals along a perimeter of the current collector body 11 at outer side. According to the present embodiment II, there are peripheral underflow holes 14 provided on a side of the current collector body 11. During the liquid injection operation, the electrolyte first reaches the current collector body 11, and then passes through the center underflow hole 13 into the winding core. In the present embodiment, in addition to the center underflow hole 13, the peripheral underflow hole 14 is also provided. Therefore, the electrolyte can simultaneously flow from the center underflow hole 13 and the peripheral underflow hole 14 into the winding core, which can assist in improving the liquid flowing capacity. Additionally and optionally, the shape of the peripheral underflow hole 14 is semi-circular. Admittedly, in some other embodiments, the peripheral underflow hole 14 may be square or half-oblong in shape.

Further, according to Figs. 5 to 8, two surfaces in a thickness direction of the current collector body 11 are provided with a protrusion 16 and a groove 17 correspondingly, the groove 17 and the protrusion 16 are aligned with each other and fit together in shape, the protrusion 16 is arranged on a welding surface, and at least part of the protrusion 16 extends to edges of the current collector body 11. According to the present embodiment II, by setting the protrusion 16 as the welding surface, the contact area between the protrusion 16 and the positive tab of the winding core is large enough, that is, the sufficient welding area between the current collector body 11 and the positive tab of the winding core can be retained, and the problem of poor welding can be effectively avoided. At the same time, compared with the whole surface welding, the welding efficiency can also be improved, thereby improving the manufacturing efficiency. Moreover, the groove 17 provided on the surface of the current collector body 11 plays a positioning role between the current collector body 11 and the winding core, which is convenient for the staff to observe the position of the protrusion 16 configured to weld.

Further, according to Figs. 5 to 8, one or more of the protrusions 16 are provided and are in arc shapes, two ends of each of the protrusion 16 extend to an edge of the current collector body 11 to form a positive current collecting area 111 around an edge part of the current collector body 11, and one or more of the peripheral underflow holes 14 are provided at one or more of the positive current collecting areas 111 correspondingly. According to the present embodiment II, the peripheral underflow hole 14 assists in improving the liquid flowing capacity, and the groove 17 plays a positioning role between the current collector body 11 and the winding core. Therefore, in order to avoid the problem of poor welding caused by the welding of the protrusion 16 corresponding to the groove 17, the peripheral underflow hole 14 is not arranged at the groove 17, but is provided in the positive current collecting area 111, which can assist in improving the liquid flowing capacity and also ensure a sufficiently large contact area.

Specifically, according to Figs. 5 to 8, three protrusions 16 are provided on an upper side, a left side and a lower side of the current collector body 11, and the three protrusions 16 are arranged in an annular array with the center underflow hole 13 as the center. Provided are also three grooves 17 correspondingly, and the three grooves 17 are also correspondingly arranged on the upper side, the left side and the lower side of the current collector body 11, and the three grooves 17 are also correspondingly arranged in an annular array with the center underflow hole 13 as the center. Correspondingly, provided are also three positive current collecting areas 111 surrounded by the three protrusions 16 and the three grooves 17. In addition, provided are also three peripheral underflow holes 14, and the three peripheral underflow holes 14 are provided one by one at the three positive current collecting areas 111.

Proposed in the present embodiment of the disclosure is not only a current collector structure, but also a battery pack including the aforementioned current collector structure.

### Embodiment III

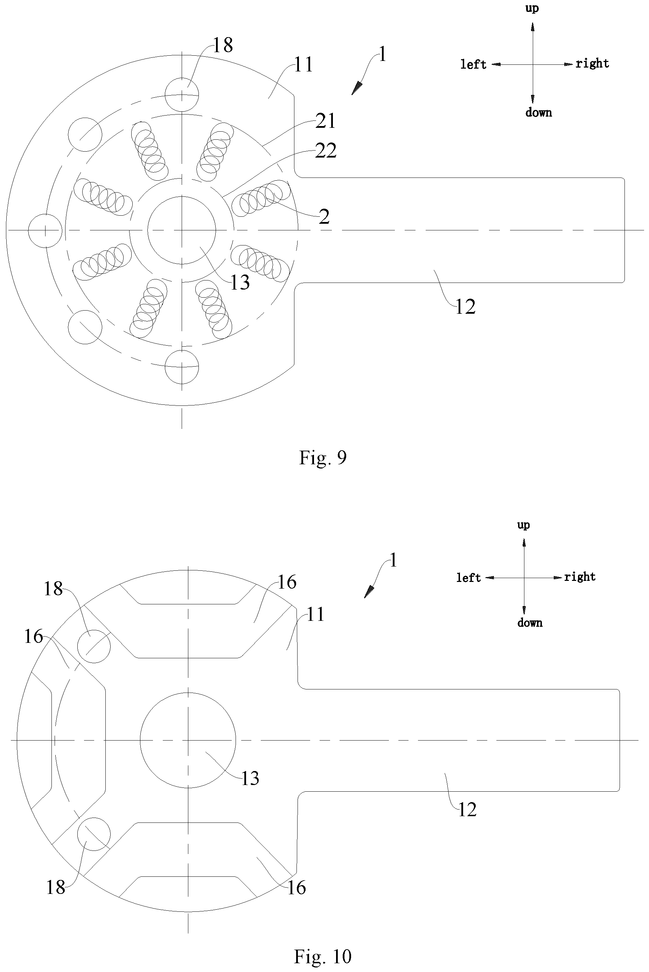

According to Fig. 9, the current collector structure proposed in embodiment III of the present disclosure includes a positive current collector 1. The positive current collector 1 includes a current collector body 11 and a current collector leading-out tab 12 connected to each other. The current collector body 11 is provided with a center underflow hole 13 through the current collector body 11 in a thickness direction thereof, and an entire surface of a surface of the current collector body 11 in the thickness direction is a welding surface configured to weld with a positive tab of a winding core.

According to the present embodiment III, due to the existence of multiple protrusions and one or more of grooves in the existing current collector, it is unable to weld at the protrusions and grooves, which may result in a smaller welding area. However, the present current collector structure is simplified. In addition to setting the necessary center underflow holes 13, an entire surface of the current collector body 11 itself can be employed to weld with the positive tabs of the winding core. An increase in the welding surface can effectively lead to an increase in the contact area with the positive tabs of the winding core, and can lead to an increase in the current-carrying area, which effectively improves the rate performance of the tabs, improves the current-carrying capacity of the battery, and reduces heat generation. In addition, the whole surface welding technology is adopted on the current collector body 11, which is conducive to the welding stability of the current collector structure and reduces the occurrence of poor welding. At the same time, the present current collector structure is not only simple in structure, but also leads to an improvement in manufacturing efficiency, and also leads to a reduction in cost.

Specifically, the center underflow hole 13 is aligned with the central hole of the winding core, which can ensure the fluid flowing condition to the greatest extent. Additionally and optionally, a diameter of the center underflow hole 13 is consistent with that of the central hole of the winding core.

Specifically, the current collector leading-out tab 12 is connected to a cap in a cover plate assembly by laser welding, and the current collector body 11 is welded to a surface of the positive tab of the winding core by laser line welding. Additionally and optionally, the positive current collector 1 is made of aluminum, for example 1060-O aluminum.

Further, according to Fig. 9, the current collector body 11 is provided with one or more of electrolyte positive electrode infiltration channels 18 through the current collector body 11 in a thickness direction thereof. According to the present embodiment III, the set electrolyte positive electrode infiltration channel 18 can lead to an increase in the transmission channel of the electrolyte in the cell and the exhaust channel for the thermal runaway, thus improving the injection efficiency and the exhaust rate when thermal runaway occurs in the cell.

Note that according to the present embodiment III, the entire surface of one surface of the current collector body 11 in a thickness direction is the welding surface, which means that except for the electrolyte positive electrode infiltration channel 18, the remaining surfaces of the current collector body 11 are employed to weld with the positive tab of the winding core.

Further, according to Fig. 9, one or more of the electrolyte positive electrode infiltration channels 18 are distributed in an annular array centered on the center underflow hole 13. An area between the center underflow hole 13 and one or more of the electrolyte positive electrode infiltration channels 18 is welded by laser screw welding 2. According to the present embodiment III, since one or more of the laser screw welding 2 can effectively increase the welding area by forming a plurality of circular welding joints between the welding joints of the screw welding, the deformation of the current collector body 11 can be suppressed and the rigidity of the current collector body 11 can be improved due to an increase in the welding area. In addition, the welding energy is uniform, the shape, penetration depth and firmness of the welding joints are consistent, the appearance is smooth and beautiful with no deformation, and the welding is firm and reliable.

Specifically, according to Fig. 9, one or more of the laser screw welding 2 form a screw welding outer boundary 21 and a screw welding inner boundary 22. The screw welding outer boundary 21 and the screw welding inner boundary 22 are both circular and provided concentrically with the center underflow hole 13. The screw welding outer boundary 21, the screw welding inner boundary 22, the center underflow hole 13 are sequentially arranged from the inside to the outside, and one or more of the electrolyte positive electrode infiltration channels 18 are provided outside the screw welding outer boundary 21.

Admittedly, in some other embodiments, an area between the center underflow hole 13 and one or more of the electrolyte positive electrode infiltration channels 18 may be welded by laser spot welding 3. One or more of the laser spot welds 3 form a spot welding outer boundary 31 and a spot welding inner boundary 32, the spot welding outer boundary 31 and the spot welding inner boundary 32 are circular and provided concentrically with the center underflow hole 13, and one or more of the electrolyte positive electrode infiltration channels 18 are provided outside the spot welding outer boundary 31.

Proposed in the present embodiment of the disclosure is not only a current collector structure, but also a battery pack including the aforementioned current collector structure.

### Embodiment IV

According to Fig. 10, the current collector structure proposed in embodiment IV of the present disclosure includes a positive current collector 1. The positive current collector 1 includes a current collector body 11 and a current collector leading-out tab 12 connected to each other. The current collector body 11 is provided with a center underflow hole 13 through the current collector body 11 in a thickness direction thereof, and an entire surface of a surface of the current collector body 11 in the thickness direction is a welding surface configured to weld with a positive tab of a winding core.

According to the present embodiment IV, due to the existence of multiple protrusions and one or more of grooves in the existing current collector, it is unable to weld at the protrusions and grooves, which may result in a smaller welding area. However, the present current collector structure is simplified. In addition to setting the necessary center underflow holes 13, an entire surface of the current collector body 11 itself can be employed to weld with the positive tabs of the winding core. An increase in the welding surface can effectively lead to an increase in the contact area with the positive tabs of the winding core, and can lead to an increase in the current-carrying area, which effectively improves the rate performance of the tabs, improves the current-carrying capacity of the battery, and reduces heat generation. In addition, the whole surface welding technology is adopted on the current collector body 11, which is conducive to the welding stability of the current collector structure and reduces the occurrence of poor welding. At the same time, the present current collector structure is not only simple in structure, but also leads to an improvement in manufacturing efficiency, and also leads to a reduction in cost.

Specifically, the center underflow hole 13 is aligned with the central hole of the winding core, which can ensure the fluid flowing condition to the greatest extent. Additionally and optionally, a diameter of the center underflow hole 13 is consistent with that of the central hole of the winding core.

Specifically, the current collector leading-out tab 12 is connected to a cap in a cover plate assembly by laser welding, and the current collector body 11 is welded to a surface of the positive tab of the winding core by laser line welding. Additionally and optionally, the positive current collector 1 is made of aluminum, for example 1060-O aluminum.

Further, according to Fig. 10, the current collector body 11 is provided with one or more of electrolyte positive electrode infiltration channels 18 through the current collector body 11 in a thickness direction thereof. According to the present embodiment IV, the set electrolyte positive electrode infiltration channel 18 can lead to an increase in the transmission channel of the electrolyte in the cell and the exhaust channel for the thermal runaway, thus improving the injection efficiency and the exhaust rate when thermal runaway occurs in the cell.

Further, according Fig. 10, two surfaces of the current collector body 11 in a thickness direction of the current collector body 11 are provided with a protrusion 16 and a groove 17 correspondingly, the groove 17 and the protrusion 16 are aligned and set in a same shape, and the protrusion 16 is arranged on a welding surface; one or more of protrusions 16 are provided and are in arc shapes, two ends of each of the protrusions 16 extend to an edge of the current collector body 11, and one electrolyte positive electrode infiltration channel 18 is provided between two adjacent protrusions 16. According to the present embodiment IV, the electrolyte positive electrode infiltration channel 18 assists in improving the injection efficiency, and the groove 17 plays a positioning role between the current collector body 11 and the winding core. Therefore, in order to avoid the problem of poor welding caused by the welding of the protrusion 16 corresponding to the groove 17, the electrolyte positive electrode infiltration channel 18 is not provided at the protrusion 16, but is provided between two adjacent protrusions 16, which can assist in improving the injection efficiency and also ensure a sufficiently large contact area.

Proposed in the present embodiment of the disclosure is not only a current collector structure, but also a battery pack including the aforementioned current collector structure.

### Embodiment V

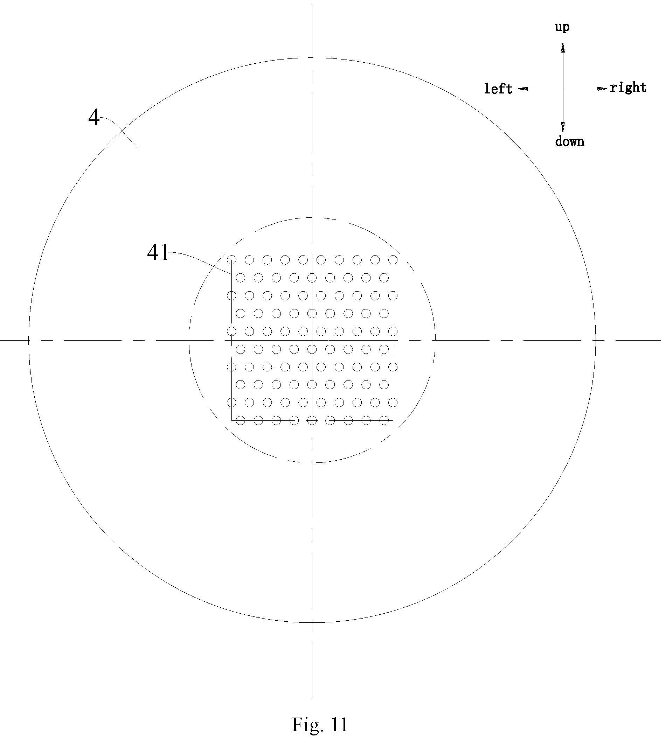

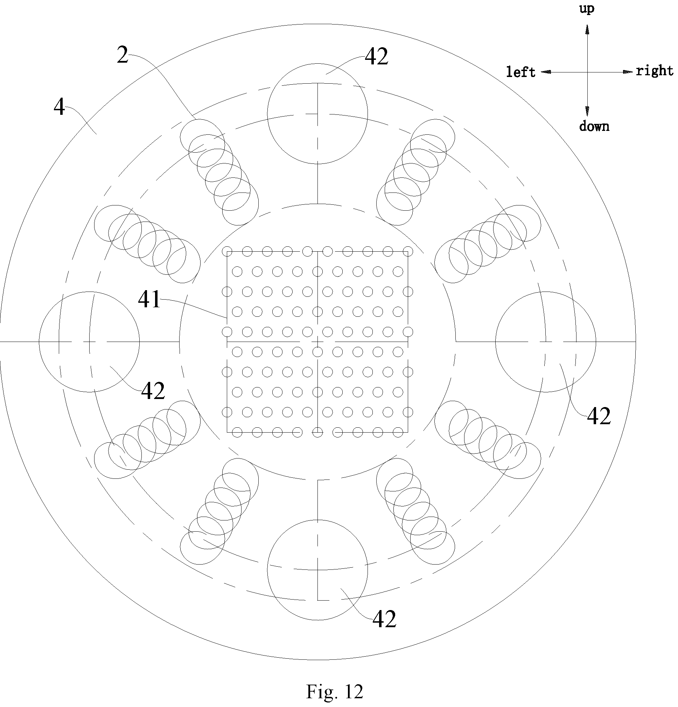

According to Figs. 11 and 12, the current collector structure proposed in embodiment V of the present disclosure includes a positive current collector 1. The positive current collector 1 includes a current collector body 11 and a current collector leading-out tab 12 connected to each other. The current collector body 11 is provided with a center underflow hole 13 through the current collector body 11 in a thickness direction thereof, and an entire surface of a surface of the current collector body 11 in the thickness direction is a welding surface configured to weld with a positive tab of a winding core.

According to the present embodiment V, due to the existence of multiple protrusions and one or more of grooves in the existing current collector, it is unable to weld at the protrusions and grooves, which may result in a smaller welding area. However, the present current collector structure is simplified. In addition to setting the necessary center underflow holes 13, an entire surface of the current collector body 11 itself can be employed to weld with the positive tabs of the winding core. An increase in the welding surface can effectively lead to an increase in the contact area with the positive tabs of the winding core, lead to an increase in the current-carrying area, which effectively improves the rate performance of the tabs, improves the current-carrying capacity of the battery, and reduces heat generation. In terms of structural design, the whole surface welding technology is adopted on the current collector body 11, which is conducive to the welding stability of the current collector structure and reduces the occurrence of poor welding. At the same time, the present current collector structure is not only simple in structure, but also leads to an improvement in manufacturing efficiency, and a reduction in cost.

Specifically, the center underflow hole 13 is aligned with the central hole of the winding core, which can ensure the fluid flowing condition to the greatest extent. Additionally and optionally, a diameter of the center underflow hole 13 is consistent with that of the central hole of the winding core.

Specifically, the current collector leading-out tab 12 is connected to a cap in a cover plate assembly by laser welding, and the current collector body 11 is welded to a surface of the positive tab of the winding core by laser line welding. Additionally and optionally, the positive current collector 1 is made of aluminum, for example 1060-O aluminum.

Further, according to Fig. 11, the current collector structure further includes a negative current collector 4, the negative current collector 4 is provided with an center solder j oint set 41 at a center of a surface in a thickness direction thereof, the solder joints of the center solder joint set 41 are distributed in at least two rows in a first direction, the solder joints in each row are distributed with an interval, and the solder joints in adjacent rows are misaligned. The first direction refers to the up and down direction indicated by the coordinate system in Fig. 11.

According to the present embodiment V, the current collector structure is simple, and the center of the negative current collector 4 is designed with a unique welding structure of misalignment embossing, which maximally guarantees the welding area of the negative current collector 4. Moreover, spot welding is performed using resistance welding, which provides strong welds with good stability.

Further, according to Fig. 12, the negative current collector 4 is provided with one or more of electrolyte negative electrode infiltration channels 42 through the negative current collector 4 in a thickness direction thereof. Additionally and optionally, provided are four electrolyte negative infiltration channels 42, and the four electrolyte negative infiltration channels 42 are provided on the upper side, the left side, the lower side, and the right side of the negative current collector 4. According to the present embodiment V, while retaining sufficient welding area between the negative current collector 4 and the tab, the set electrolyte negative electrode infiltration channel 42 can lead to an increase in the transmission channel of the electrolyte in the cell and the exhaust channel for the thermal runaway, thus improving the injection efficiency and the exhaust rate when thermal runaway occurs in the cell.

Further, according to Fig. 12, one or more of the electrolyte negative electrode infiltration channels 42 are distributed in an annular array centered on a center solder joint set 41, and an area between two adjacent electrolyte negative electrode infiltration channels 42 is welded by laser screw welding 2. According to the present embodiment V, since one or more of the laser screw welding 2 can effectively increase the welding area by forming a plurality of circular welding joints between the welding joints of the spot weld, the deformation of the current collector body 11 can be suppressed and the rigidity of the current collector body 11 can be improved due to an increase in the welding area. In addition, the welding energy is uniform, the shape, penetration depth and firmness of the welding joints are consistent, the appearance is smooth and beautiful with no deformation, and the welding is firm and reliable.

Admittedly, in some other embodiments, an area between two adjacent electrolyte negative electrode infiltration channels 42 may be welded by laser spot welding 3. The laser spot welding has the advantages of such as fast speed, high accuracy, small heat input, small deformation in workpiece, precise control, small focus light point, high positioning accuracy, and easy automation.

Specifically, one or more of the electrolyte negative electrode infiltration channels 42 are circular, a negative electrode infiltration channel boundary is formed by connecting the centers of one or more of the negative electrode infiltration channels 42, and one or more of the laser screw welding 2 or one or more of the laser spot welding 3 passes through the negative electrode infiltration channel boundary.

Proposed in the present embodiment of the disclosure is not only a current collector structure, but also a battery pack including the aforementioned current collector structure.

## Claims

1. A current collector structure, comprising a positive current collector (1), wherein the positive current collector comprises a current collector body (11) and a current collector leading-out tab (12) connected to each other;
wherein the current collector body (11) is provided with a center underflow hole (13) through the current collector body (11) in a thickness direction thereof, and
an entire surface of a surface of the current collector body (11) in the thickness direction is a welding surface configured to weld with a positive tab of a winding core.

2. The current collector structure according to claim 1, wherein one or more of peripheral underflow holes (14) are arranged at intervals along a perimeter of the current collector body (11) at outer side.

3. The current collector structure according to claim 2, wherein the current collector body (11) is provided with an inner underflow hole (15) in a thickness direction of the current collector body (11), and the inner underflow hole (15) is arranged on a side of the center underflow hole (13).

4. The current collector structure according to claim 3, wherein the welding surface of the current collector body (11) is welded by laser screw welding (2) or laser spot welding (3).

5. The current collector structure according to claim 4, wherein one or more of the laser screw welding (2) form a screw welding outer boundary (21) and a screw welding inner boundary (22), the screw welding outer boundary (21) and the screw welding inner boundary (22) are circular and provided concentrically with the center underflow hole (13), and a center of the inner underflow hole (15) is located on the screw welding outer boundary (21); or
one or more of the laser spot welding (3) forms a spot welding outer boundary (31) and a spot welding inner boundary (32), the spot welding outer boundary (31) and the spot welding inner boundary (32) are circular and provided concentrically with the center underflow hole (13), and a center of the inner underflow hole (15) is located on the spot welding outer boundary (31).

6. The current collector structure according to claim 2, wherein two surfaces of the current collector body (11) in a thickness direction of the current collector body (11) are provided with a protrusion (16) and a groove (17) correspondingly, the groove (17) and the protrusion (16) are aligned with each other and fit together in shape, the protrusion (16) is arranged on a welding surface, and at least part of the protrusion (16) extends to edges of the current collector body (11).

7. The current collector structure according to claim 6, wherein one or more of the protrusions (16) are provided and are in arc shapes, two ends of each of the protrusions (16) extend to an edge of the current collector body (11) to form a positive current collecting area (111) around an edge part of the current collector body (11), and one or more of the peripheral underflow holes (14) are provided at one or more of the positive current collecting areas (111) correspondingly.

8. The current collector structure according to claim 1, wherein the current collector body (11) is provided with one or more of electrolyte positive electrode infiltration channels (18) through the current collector body (11) in the thickness direction thereof.

9. The current collector structure according to claim 8, wherein one or more of the electrolyte positive electrode infiltration channels (18) are distributed in an annular array centered on the center underflow hole (13); and
an area between the center underflow hole (13) and one or more of the electrolyte positive electrode infiltration channels (18) is welded by laser screw welding (2) or laser spot welding (3).

10. The current collector structure according to claim 9, wherein one or more of the laser screw welding (2) form a screw welding outer boundary (21) and a screw welding inner boundary (22), the screw welding outer boundary (21) and the screw welding inner boundary (22) are circular and provided concentrically with the center underflow hole (13), and one or more of the electrolyte positive electrode infiltration channels (18) are provided outside the screw welding outer boundary (21); or
one or more of the laser spot welding (3) form a spot welding outer boundary (31) and a spot welding inner boundary (32), the spot welding outer boundary (31) and the spot welding inner boundary (32) are circular and provided concentrically with the center underflow hole (13), and one or more of the electrolyte positive electrode infiltration channels (18) are provided outside the spot welding outer boundary (31).

11. The current collector structure according to claim 8, wherein two surfaces of the current collector body (11) in a thickness direction of the current collector body (11) are provided with a protrusion (16) and a groove (17) correspondingly, the groove (17) and the protrusion (16) are aligned with each other and fit together in shape, the protrusion (16) is arranged on a welding surface;
one or more of protrusions (16) are provided and are in arc shapes, two ends of each protrusion (16) extend to an edge of the current collector body (11), and one electrolyte positive electrode infiltration channel (18) is provided between two adjacent protrusions (16).

12. The current collector structure according to claim 1, further comprising a negative current collector (4), wherein the negative current collector (4) is provided with an center solder joint set (41) at a center of a surface in a thickness direction thereof, solder joints of the center solder joint set (41) are distributed in at least two rows in a first direction, the solder joints in each row are distributed with an interval, and the solder joints in adjacent rows are misaligned.

13. The current collector structure according to claim 12, wherein the negative current collector (4) is provided with one or more of electrolyte negative electrode infiltration channels (42) through the negative current collector (4) in the thickness direction thereof.

14. The current collector structure according to claim 13, wherein one or more of the electrolyte negative electrode infiltration channels (42) are distributed in an annular array centered on the center solder joint set (41); and
an area between two adjacent electrolyte negative electrode infiltration channels (42) is welded by laser screw welding (2) or laser spot welding (3).

15. A battery pack, wherein the battery pack comprises the current collector structure according to any one of claims 1-14.
